# EUROPEAN PATENT SPECIFICATION

(11) **EP 1 670 090 B1**
(45) Date of publication and mention of the grant of the patent: **29.10.2008**
(21) Application number: 05257663.4
(22) Date of filing: 13.12.2005
(51) Int. Cl.: H01M 8/14, H01M 8/06, H01M 8/04

(54) **Molten carbonate fuel cell, operating method thereof, sintering furnace, and power generator**
Schmelzkarbonatbrennstoffzelle, Betriebsverfahren dafür, Sinterofen und Stromgenerator
Pile à combustible au carbonate fondu, procédé d'opération correspondant, four de frittage et générateur de courant

(30) Priority: 13.12.2004 JP 2004359363; 28.04.2005 JP 2005133293; 06.10.2005 JP 2005293545
(43) Date of publication of application: 14.06.2006
(73) Proprietor: NGK INSULATORS, LTD., Nagoya-City, Aichi Pref. 467-8530 (JP)
(72) Inventor: Kurashima, Yoshihiko c/o NGK Insulators, Ltd., Nagoya City Aichi-ken, 467-8530 (JP); Honda, Toshihiko c/o NGK Insulators, Ltd., Nagoya City Aichi-ken, 467-8530 (JP)
(74) Representative: Paget, Hugh Charles Edward

(56) References cited:
- EP-A- 0 418 864
- GB-A- 1 199 474
- US-A- 3 318 590
- PATENT ABSTRACTS OF JAPAN vol. 1997, no. 07, 31 July 1997 (1997-07-31) & JP 09 063608 A (ISHIKAWAJIMA HARIMA HEAVY IND CO LTD), 7 March 1997 (1997-03-07)
- CHOONG-GON LEE ET AL: "In situ NiO dissolution behavior in (Li+Na) CO3 melts under pressurized oxidant gas atmospheres" JOURNAL OF POWER SOURCES ELSEVIER SWITZERLAND, vol. 62, no. 1, September 1996 (1996-09), pages 145-147, XP002372918 ISSN: 0378-7753

## Description

### BACKGROUND OF THE INVENTION

Field of the Invention

The present invention relates to an apparatus having in combination a fuel cell and a sintering furnace, and a method of operation thereof. More particularly, the present invention relates to such an apparatus having a molten carbonate fuel cell, in which the heat of the furnace exhaust gas can be effectively reclaimed and fuel consumption can be reduced.

Description of Related Art

Conventionally, oxygen and carbon dioxide contained in the air have been used as the oxygen and carbon dioxide to be supplied to the cathode side of molten carbonate fuel cells. A gas with a high carbon dioxide concentration is advantageous to activate the fuel cell reaction. For this reason, carbon dioxide in the air of which the concentration is no more than 0.03 vol% has been commonly used after increasing the concentration of carbon dioxide. For example, a method of recycling exhaust gas containing carbon dioxide generated on the anode side by the electrochemical reaction during fuel cell operation is used for concentrating carbon dioxide in the gas to be supplied to the cathode side (cathode gas). However, since the fuel cell reaction is modest immediately after startup, the amount of carbon dioxide generated in the anode side is too small to sufficiently increase the carbon dioxide concentration in the gas to be supplied to the cathode side by recycling the anode exhaust gas. A method of concentrating carbon dioxide by the pressure swing adsorption (PSA) system before supplying the cathode side involves power for compressing the air, resulting in a high energy cost. In other molten carbonate fuel cells not employing the PSA system, a part of the cell fuel is burnt at the time of startup to generate heat and carbon dioxide. The generated heat is used for heating the fuel cell unit up to the operating temperature, while the carbon dioxide is supplied to the cathode side. This method also wastes energy by burning the fuel gas (e. g. Japanese Patent Application Laid-open No. 1993-89899).

Various industrial furnaces have been used for heating a wide variety of materials in various industrial fields. The industrial furnace of the type in which a fossil fuel is burnt for heating materials generates a high temperature exhaust gas (a furnace exhaust gas) containing carbon dioxide simultaneously with generation of heat by burning a fuel. In view of the recent concern over the adverse effect of high temperature exhaust gas on the environment, effective recovery and reuse of the heat possessed by the furnace exhaust gas is a subject of interest. Furthermore, the problem of the exhaust gas containing carbon dioxide is particularly highlighted in connection with the problems associated with global warming and the like in recent years. Effectively collecting the heat in exhaust gas from industrial furnaces for reuse, while reducing the amount of carbon dioxide contained therein is strongly demanded.

On the other hand, not much effort has been directed to reclaiming heat from and reducing the amount of carbon dioxide in exhaust gas from sintering furnaces for ceramics and the like, which are comparatively small industrial furnaces. The combustion gas containing carbon dioxide used for heating sintering materials in a sintering furnace is discharged as is to the atmosphere. On the contrary, for example, a method of reclaiming heat energy of exhaust gas by returning the exhaust gas discharged from a sintering furnace to the sintering furnace has been proposed (e.g. Japanese Patent Application Laid-open No. 2002-340482). This method can reclaim part of the heat energy in exhaust gas and can reduce the total amount of fuel and, therefore, can reduce the amount of carbon dioxide generated. The amount of carbon dioxide reduction, however, is limited.

EP-A-418864 describes the recovery of carbon dioxide gas from the combustion exhaust gas of fossil fuel, by supplying the exhaust gas as part of the oxidizing gas in the cathode chamber of a molten carbonate fuel cell. Specifically, a coal-fired or gas turbine electricity producing power plant is mentioned as providing the exhaust gas.

JP-A-09-063608 describes a fuel cell system including a heater for the cathode gas of the fuel cell. In the heater the cathode gas is indirectly heated by hot gas from a hot air generating furnace which itself is fed with a combustion gas from a combustion chamber of a reforming apparatus supplying anode gas to the cell.

### SUMMARY OF THE INVENTION

The present invention has been completed in view of the problems in the molten carbonate fuel cell in the prior art whereby extra energy is required for supplying a gas with a high carbon dioxide concentration to the cathode side and the heat in exhaust gas from furnaces can be reclaimed only insufficiently.

The invention provides an apparatus as set out in claim 1.

The invention further provides a method of operating a sintering furnace and a fuel cell, as set out in claim 12.

### Brief Description of the Drawings

### BRIEF DESCRIPTION OF THE DRAWINGS

Figure 1 is a cross-sectional view schematically showing one embodiment of the fuel cell which is used in the present invention.

Figure 2 is a block flow diagram schematically showing one embodiment of the apparatus of the present invention.

Figure 3 is a block flow diagram schematically showing another embodiment of the apparatus of the present invention.

### DETAILED DESCRIPTION OF THE INVENTION AND PREFERRED EMBODIMENT

In the apparatus of the present invention, when a furnace exhaust gas or a mixed gas of the furnace exhaust gas and a preheated gas for cathode use is used as the cathode gas, the furnace exhaust gas containing carbon dioxide discharged from a sintering furnace can be used as the cathode gas for the molten carbonate fuel cell without any processing for increasing the carbon dioxide concentration. Therefore, electric power can be generated by supplying a gas with a high carbon dioxide concentration without using extra energy. According to the operating method of the present invention, when the furnace exhaust gas or the mixed gas is used as the cathode gas, the furnace exhaust gas containing carbon dioxide discharged from a sintering furnace can be used as the cathode gas for the molten carbonate fuel cell without any processing for increasing the carbon dioxide concentration. Therefore, electric power can be generated by supplying a gas with a high carbon dioxide concentration without using extra energy. In the apparatus of the present invention, when the furnace exhaust gas or the mixed gas is used as the cathode gas, the furnace exhaust gas containing carbon dioxide discharged from a sintering furnace main body can be supplied to the cathode side of the fuel cell without any processing for increasing the carbon dioxide concentration. Therefore, electric power can be generated by supplying a gas with a high carbon dioxide concentration to the cathode side of the fuel cell without using extra energy.

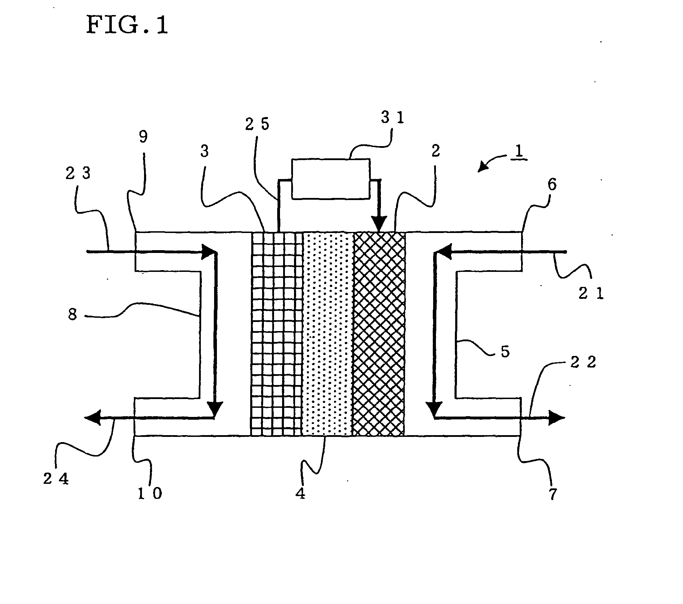

Figure 1 is a cross-sectional view schematically showing one embodiment of the fuel cell which is used in the present invention. As shown in Figure 1, the fuel cell 1 of this embodiment comprises a cathode 2, an anode 3, and an electrolyte layer 4 containing molten carbonate held between the cathode 2 and anode 3. A gas containing oxygen and carbon dioxide (a cathode gas) 21 is supplied to the cathode 2 side and a gas containing hydrogen (an anode gas) 23 is supplied to the anode 3 side to generate electric power. The cathode gas 21 is a gas containing a furnace exhaust gas discharged from an industrial furnace for heating materials, a mixed gas of the furnace exhaust gas and a gas for cathode use which is preheated using the furnace exhaust gas as a heating source. The carbon dioxide concentration of the cathode gas 21 is 0.1-50 vol%. The carbon dioxide concentration of the cathode gas 21 is preferably 10-45 vol%, and more preferably 20-40 vol%. If the carbon dioxide concentration is less than 0.1 vol%, the electrochemical reaction occurs only modestly; if more than 50 vol%, the amount of oxygen molecule is insufficient for producing an adequate amount of carbonate ion. The industrial furnace is a sintering furnace for heating materials using a combustion gas generated by burning a fuel, and the furnace exhaust gas is an exhaust gas of the combustion gas (combustion exhaust gas) anddecomposition gas produced by decomposition of organic materials contained in the heated materials (decomposition exhaust gas). The use of a gas containing the decomposition exhaust gas as the cathode gas 21 can eliminate the need for burning the decomposition gas into innoxious gas (detoxication treatment) using an after-burner or the like installed outside the furnace. The detoxication treatment within the fuel cell unit can save fuel required for operating the after-burner or the like. The cathode gas 21 either may consist of furnace exhaust gas discharged from the sintering furnace containing carbon dioxide at a high concentration and also containing oxygen (combustion exhaust gas and decomposition exhaust gas) or may be a mixture of the furnace exhaust gas (combustion exhaust gas and decomposition exhaust gas) and a preheated gas for cathode use. When the furnace exhaust gas (combustion exhaust gas and/or decomposition exhaust gas) and a gas for cathode use or preheated gas for cathode use are mixed (when using a mixed gas), the ratio by volume of the furnace exhaust gas (combustion exhaust gas and decomposition exhaust gas) to the gas for cathode use or preheated gas for cathode use is preferably 100:0 to 1:4. Although a cathode gas 21 with an appropriate carbon dioxide concentration can be obtained without any processing for increasing the carbon dioxide concentration such as concentration using the PSA method, the carbon dioxide concentration may be optimized by employing any such process for increasing the carbon dioxide concentration. In such a case, the cost for the process for increasing the carbon dioxide concentration is very small due to the use of the furnace exhaust gas (combustion exhaust gas and decomposition exhaust gas) with a high carbon dioxide concentration as the cathode gas 21. The above discussion is based on the presumption that a furnace exhaust gas is used as a carbon dioxide source for the cathode gas 21.

In this manner, when the furnace exhaust gas or the mixed gas is used as the cathode gas 21 in the fuel cell 1 of this embodiment, the furnace exhaust gas (combustion exhaust gas and decomposition exhaust gas) containing carbon dioxide discharged from a sintering furnace can be used as the cathode gas 21 for the fuel cell 1 without any processing for increasing the carbon dioxide concentration. Therefore, electric power can be generated by supplying a gas with a high carbon dioxide concentration to the cathode 2 side without using extra energy.

In this embodiment, the industrial furnace is a facility for heating materials, particularly a sintering furnace for heating and sintering materials using combustion gas generated by burning fuel. The fuel used in the sintering furnace is a fuel containing a hydrocarbon, specifically, at least one fuel selected from the group consisting of town gas, liquefied natural gas, LP gas, diesel fuel oil, and heavy oil. The term "town gas" indicates a gas containing 70-90 vol% of methane as a main component and other hydrocarbons such as ethane, propane, and butane.

In the fuel cell 1 of this embodiment, the cathode gas 21 enters a cathode gas channel 5 from the cathode gas inlet port 6 and is fed to the cathode 2, where the cathode gas 21 supplies carbon dioxide and oxygen, and is discharged via a cathode exhaust gas exit port 7 as cathode exhaust gas. The anode gas 23 enters an anode gas channel 8 from an anode gas inlet port 9 and is fed to the anode 3, where the anode gas 23 supplies hydrogen, and is discharged via an anode exhaust gas exit port 10 as anode exhaust gas. Electrons produced by the reactions in the cathode 2 and anode 3 travel from the anode 3 to the cathode 2 in the direction 25 and are used as electrical energy at a load 31. When the cathode gas 21 or anode gas 23 contains foreign matters such as dust, these foreign matters are preferably removed using a filter before these gases are sent to the cathode gas channel 5 or anode gas channel 8.

Typical reactions that take place in the fuel cell (molten carbonate fuel cell) of the present invention are as follows.
(1) On the cathode side: CO₂ + (1/2)O₂ + 2e⁻ = CO₃²⁻
(2) Carbonate ions (CO₃²⁻) are transferred to the anode side through an electrolyte layer.
(3) On the anode side: H₂ + CO₃²⁻ = H₂O + CO₂ + 2e⁻
(4) When the anode gas contains CO, the following reaction takes place on the anode side. CO + H₂O = CO₂ + H,

H₂ produced in this reaction is used as the anode side H₂ in the reaction (3).

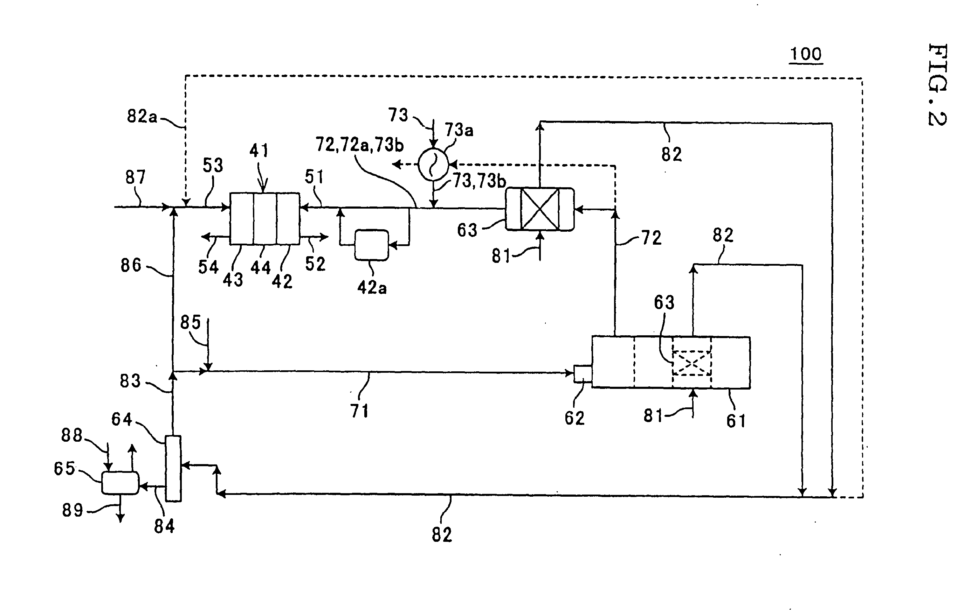

Figure 2 is a block flow diagram schematically showing one embodiment of the apparatus of the present invention. The cathode gas 51 (the cathode gas indicated by numeral 21 in Figure 1) contains the furnace exhaust gas or mixed gas, and a furnace exhaust gas 72 or a mixed gas 72a contained in the cathode gas 51 is preferably preheated in a catalyst combustor 42a, particularly when the furnace exhaust gas 72 or the mixed gas 72a contains a decomposition exhaust gas at a comparatively low temperature. In this manner, the cathode gas can be sufficiently converted into an innoxious gas by preheating in the catalyst combustor 42a. Since a cathode 42 is usually heated to a temperature of 600-650°C, the decomposition exhaust gas is rendered sufficiently innoxious even when directly supplied to the cathode 42. In this instance, although the heat source (fuel) for the catalyst combustor 42a is preferably an anode exhaust gas 54 discharged from an anode 43 in view of the heat efficiency, fuel may be supplied from other sources.

As a component of the mixed gas 72a other than the furnace exhaust gas, a gas for cathode use 73 or a preheated gas for cathode use 73b is usually used as mentioned above. Since the air at room temperature is usually used as the gas for cathode use 73, the use of preheated gas for cathode use 73b, for example, which has been preheated in a heat exchanger 73a using furnace exhaust gas as a heat source is more preferable for reducing the amount of anode exhaust gas 54 which is used for heating the catalyst combustor 42a and for promoting the power generation efficiency. Here, the anode exhaust gas 54 is the gas discharged as a part of the fuel not consumed. Therefore, reducing the amount of anode exhaust gas results in reduction of the amount of fuel. The power generation efficiency here is a value obtained by dividing the generated electric energy by the energy of input fuel. Generation of power using a smaller amount of fuel indicates promotion of the power generation efficiency. Surplus anode exhaust gas 54 contains hydrogen and the like and, therefore, can be either used as fuel for the fuel cell or removed to outside the fuel cell unit, as required. In this instance, although the heat source (fuel) for the heat exchanger 73a is preferably the furnace exhaust gas 72 in view of the heat efficiency as mentioned above, fuel may be supplied from other sources. It is preferable to burn combustible components (hydrogen and carbon monoxide) in the anode exhaust gas 54 in the catalyst combustor 42a while introducing air therein, thereby heating the air and producing carbon dioxide necessary for the cathode 42. However, since the carbon dioxide concentration may be insufficient if only the anode exhaust gas 54 is used, part of the cathode exhaust gas 52 is preferably recycled as the cathode gas 51. When the concentration of carbon dioxide supplied to the cathode 42 is insufficient, it is desirable to increase the recycling ratio of the cathode exhaust gas to maintain a constant carbon dioxide concentration.

An anode gas 53 (indicated by numeral 23 in Figure 1) contains hydrogen at a concentration of preferably 100-50 vol%, and more preferably 90-70 vol%. As the anode gas 53, a reformed gas containing hydrogen and carbon dioxide obtained by reforming hydrocarbon and water using a steam reformer 63 installed in an industrial furnace can be used. The reformed gas may be used as is or may be used after increasing the hydrogen concentration by selectively separating hydrogen from the reformed gas using a hydrogen separator 64.

In the fuel cell of this embodiment, lithium-containing nickel oxide and the like can be used as the material for the cathode. As the material for the anode, aluminum-containing nickel, chromium-containing nickel, and the like can be given. As the material for the electrolyte layer, lithium aluminate (LiAlO₂) impregnated with molten carbonate can be used. Although the forms of the fuel cell, cathode, anode, and electrolyte layer are not specifically limited, a laminate made from a plate-like cathode, a plate-like anode, and a plate-like electrolyte layer held between them may be put in a cylindrical fuel cell container.

As a molten carbonate, sodium carbonate, lithium carbonate, potassium carbonate, and the like may be used either individually or as a mixture.

The fuel cell reaction temperature in the fuel cell 1 of this embodiment is preferably 500-700°C. If less than 500°C, carbonate may brought into a molten state only insufficiently, resulting in reduced conductivity. If more than 700°C, not only the amount of vaporized molten carbonate increases, resulting in a decrease in the amount of electrolyte, but also the strength of stainless steel which is the material of construction of the fuel cell unit decreases, which may result in deformation of the fuel cell.

One embodiment of the method for operating the fuel cell of the present invention is described below. The operating method of the present embodiment comprises supplying the cathode gas 21 containing carbon dioxide and oxygen to the cathode 2 side and supplying the anode gas 23 containing hydrogen to the anode 3 as shown in Figure 1 to generate electricity, wherein the cathode gas contains a furnace exhaust gas (combustion exhaust gas and decomposition exhaust gas) discharged from a sintering furnace for heating materials or a mixed gas of the furnace exhaust gas and a gas for cathode use which is preheated using the furnace exhaust gas as a heating source, and has a carbon dioxide concentration of 0.1-50 vol%.

In the operating method of this embodiment, the carbon dioxide concentration of the cathode gas 21 is preferably 10-45 vol%, and more preferably 20-40 vol%. If the carbon dioxide concentration is less than 0.1 vol%, the fuel cell reaction occurs only modestly; if more than 50 vol%, the amount of oxygen molecule is insufficient for producing an adequate amount of carbonate ion. The cathode gas 21 either may contain only furnace exhaust gas discharged from the sintering furnace containing carbon dioxide at a high concentration and also containing oxygen (combustion exhaust gas and decomposition exhaust gas) or may be a mixture of the furnace exhaust gas (combustion exhaust gas and decomposition exhaust gas) and a gas for cathode use or preheated gas for cathode use. When the furnace exhaust gas (combustion exhaust gas and decomposition exhaust gas) and a gas for cathode use or preheated gas for cathode use are mixed (when using a mixed gas), the ratio by volume of the furnace exhaust gas (combustion exhaust gas and decomposition exhaust gas) to the gas for cathode use or preheated gas for cathode use is preferably 100:0 to 1:4. Although a cathode gas 21 with a required carbon dioxide concentration can be obtained without any processing for increasing the carbon dioxide concentration such as the concentration using the PSA method, the carbon dioxide concentration may be optimized by employing any such process for increasing the carbon dioxide concentration. In such a case, the cost for the process for increasing the carbon dioxide concentration is very small due to the use of the furnace exhaust gas (combustion exhaust gas and decomposition exhaust gas) with a high carbon dioxide concentration as the cathode gas 21. The above discussion is based on the presumption that a furnace exhaust gas is used as a carbon dioxide source for the cathode gas 21.

In this manner, when the furnace exhaust gas or the mixed gas is used as the cathode gas 21 in the operating method of the fuel cell of this embodiment, the furnace exhaust gas (combustion exhaust gas and decomposition exhaust gas) containing carbon dioxide discharged from a sintering furnace can be used as the cathode gas for the fuel cell without any processing for increasing the carbon dioxide concentration. Therefore, electric power can be generated by supplying a gas with a high carbon dioxide concentration to the cathode side without using extra energy.

The other constitutions, use conditions, and the like in the operating method of the fuel cell of this embodiment are the same as those of the fuel cell of the present invention that have already been discussed. The same effects can be obtained by employing such constitutions, use conditions, and the like in operating the fuel cell of this embodiment.

Next, the sintering furnace equipped with the above fuel cell (hereinafter simply referred to from time to time as "sintering furnace") will be described. As shown in Figure 2, a sintering furnace 100 of this embodiment comprises a combustor 62 for burning a fuel 71 containing hydrocarbon to generate a combustion gas, a sintering furnace main body 61 for heating and sintering materials delivered therein by the combustion gas and discharging combustion gas after sintering as a furnace exhaust gas (combustion exhaust gas and decomposition gas) 72, and the above fuel cell 41 installed so that the furnace exhaust gas (combustion exhaust gas and decomposition gas) 72 discharged from the sintering furnace main body 61 may be supplied to the cathode 42 side as the cathode gas 51. The carbon dioxide concentration of the cathode gas 51 is 0.1-50 vol%, preferably 10-45 vol%, and more preferably 20-40 vol%. If the carbon dioxide concentration is less than 0.1 vol%, the fuel cell reaction occurs only modestly; if more than 50 vol%, the amount of oxygen molecule is insufficient for producing adequate amount of carbonate ion. The cathode gas 51 either may be the furnace exhaust gas (combustion exhaust gas and decomposition exhaust gas) 72 containing carbon dioxide at a high concentration and also containing oxygen discharged from the sintering furnace main body 61 or may be a mixture of the furnace exhaust gas (combustion exhaust gas and decomposition exhaust gas) 72 and air as the gas for cathode use 73 or preheated air as the preheated gas for cathode use 73b. When the furnace exhaust gas (combustion exhaust gas and decomposition exhaust gas) 72 and the gas for cathode use 73 or the preheated gas for cathode use 73b are mixed (when using a mixed gas), the ratio by volume of the furnace exhaust gas (combustion exhaust gas and/or decomposition exhaust gas) 72 to the gas for cathode use 73or preheated gas for cathode use 73b is preferably 100:0 to 1:4. Although a cathode gas 51 with a required carbon dioxide concentration can be obtained without any processing for increasing the carbon dioxide concentration such as the concentration using the PSA method, the carbon dioxide concentration may be optimized by employing such any a process for increasing the carbon dioxide concentration. In such a case, the cost for the process for increasing the carbon dioxide concentration is very small due to the use of the furnace exhaust gas (combustion exhaust gas and decomposition exhaust gas) 72 with a high carbon dioxide concentration as the cathode gas 51. The above discussion is based on the presumption that a furnace exhaust gas is used as a carbon dioxide source for the cathode gas 51.

In this manner, when using the sintering furnace of the present invention in which the sintering furnace main body is equipped with the fuel cell, the furnace exhaust gas (combustion exhaust gas and decomposition exhaust gas) containing carbon dioxide discharged from the sintering furnace main body is supplied to the cathode side of the fuel cell without any processing for increasing the carbon dioxide concentration. Therefore, electric power can be generated by supplying a gas with a high carbon dioxide concentration to the cathode side without using an extra energy and, in addition, the furnace exhaust gas (combustion exhaust gas and decomposition exhaust gas) generated in the sintering furnace main body can be effectively used. Moreover, the amount of carbon dioxide discharged to the atmosphere can be reduced by immobilizing carbon dioxide contained in the anode exhaust gas of the fuel cell using a carbon dioxide immobilizer and the like.

In the apparatus of this embodiment, the fuel cell is equipped with a cathode 42, an anode 43, and an electrolyte layer 44 containing molten carbonate held between the cathode 42 and anode 43. A gas containing oxygen and carbon dioxide (a cathode gas 51) is supplied to the cathode 42 side and a gas containing hydrogen (an anode gas 53) is supplied to the anode 43 side to generate electric power. The constitutions, use conditions, and the like of the fuel cell are the same as those of the above-described fuel cell, and the same effects can be obtained by employing such constitutions, use conditions, and the like.

In the sintering furnace 100 of this embodiment shown in Figure 2, there are no specific limitations to the sintering furnace main body 61. A common instrument into which the material to be sintered such as ceramics and the like are delivered to be sintered by combustion gas generated by burning the fuel 71 containing hydrocarbons using a combustor 61 can be used. A ceramic honeycomb structure is a preferable material to be sintered. The honeycomb structure of this embodiment is a structure formed of a ceramic material having a number of cells divided by partitions functioning as fluid channels. The sintering furnace main body 61 may be a batch type which intermittently sinters a unit amount of materials to be sintered. However, a continuous type sintering furnace main body 61 into which the materials to be sintered such as a ceramic honeycomb structure can be continuously delivered, heated and sintered therein, and carried therefrom after sintering is more preferable.

In the sintering furnace 100 of this embodiment shown in Figure 2, there are no specific limitations to the combustor 62, insofar as the furnace can efficiently burn the fuel 71 containing hydrocarbons. The combustor 62 may be either installed outside the sintering furnace main body 61 and designed to send burnt gas to the sintering furnace main body 61 via a pipe or may be installed inside the sintering furnace main body 61. According to the capacity of the combustor 62, size of the sintering furnace main body 61, and the like, either one combustor 62 may be installed for one the sintering furnace main body 61 or two or more combustors 62 may be installed for one sintering furnace main body 61. As the combustor 62, any type of combustor having a burner equipped with a line for introducing air and fuel can be used. A regeneration-type burner in which the air for combustion is preheated can be preferably used. The fuel 71 containing hydrocarbons can be obtained by supplying a hydrocarbon-containing fuel 85 via a hydrocarbon-containing fuel supply means (not shown). Part of a hydrogen fuel 83 supplied from the hydrogen separator 64 may be blended. The addition of the hydrogen fuel 83 supplied from the hydrogen separator 64 can reduce the fuel consumption. The hydrocarbon-containing fuel 85 is preferably at least one fuel selected from the group consisting of town gas, liquefied natural gas, LP gas, diesel fuel oil, and heavy oil.

As shown in Figure 2, the sintering furnace 100 of this embodiment is preferably provided with a steam reformer 63 in which a material to be reformed 81 containing hydrocarbon and steam introduced therein are heated and reacted into a reformed gas 82 containing hydrogen and carbon dioxide, a hydrogen separator 64 in which hydrogen in the reformed gas 82 produced in the steam reformer 63 is selectively separated to obtain the hydrogen fuel 83 containing hydrogen as a main component and a residual gas 84 containing carbon dioxide, and a carbon dioxide immobilizer 65 for immobilizing the carbon dioxide in the residual gas 84 so that carbon dioxide may not be discharged outside in a gaseous state. In figure 2, each instrument is connected with other instruments via pipes in which fuels flow and are transferred.

In this manner, a part of the combustion heat generated in the sintering furnace main body 61 is recovered in the steam reformer 63 to produce hydrogen-containing reformed gas 82, which is used as the anode gas 53 as is or from which the hydrogen is separated by the hydrogen separator 64 to be used as the anode gas 53. The remaining gas components after having been used as the anode gas 53 are discharged as an anode exhaust gas 54. Since the anode exhaust gas 54 contains carbon dioxide, this gas may be either mixed with the cathode gas 51 or supplied to the carbon dioxide immobilizer 65 to cause the carbon dioxide to be absorbed. The furnace exhaust gas (combustion exhaust gas and decomposition exhaust gas) 72 discharged from the sintering furnace main body 61 is preferably used for supplying heat to the steam reformer 63, following which the gas is preferably used as the cathode gas 51. After having been used as the cathode gas 51, the remaining gas is discharged as a cathode exhaust gas 52.

The carbon dioxide immobilizer 65 is designed to allow sodium hydroxide as an immobilizer 88 for immobilizing carbon dioxide to be introduced therein, causing the immobilizer 88 to come in contact with a residual gas 84 thereby causing the immobilizer 88 to absorb carbon dioxide contained in the residual gas 84 to produce sodium carbonate, and discharging a waste fluid 89 containing the sodium carbonate outside. Any material that can react with or absorb carbon dioxide can be used as the immobilizer 88 without any specific limitations. For example, NaOH, Mg(OH)₂, and the like can be used.

The sintering furnace 100 of this embodiment is preferably designed so that the steam reforming reaction is caused to occur in the steam reformer 63, which is installed in the sintering furnace main body 61 and in the passage of the furnace exhaust gas (combustion gas and decomposition exhaust gas) 72, by heating the material to be reformed 81 flowing in the steam reformer 63 with the combustion gas (furnace exhaust gas) and/or the radiant heat from the sintered material, sintering jigs, and furnace wall (the wall of exhaust gas (combustion gas and decomposition exhaust gas) passage) heated by the combustion gas. The resulting reformed gas 82 is supplied to the hydrogen separator 64 and separated into hydrogen fuel 83 and residual gas 84. The hydrogen fuel 83 (hydrogen fuel for anode 86) is preferably used as the anode gas 53. In this manner, high purity hydrogen can be used for the fuel cell. The reformed gas 82 may also be directly supplied to the anode 43 side as a reformed gas for anode use 82a. As the anode gas 53 supplied to the fuel cell 41, a hydrogen-containing gas for anode use 87 supplied by a hydrogen supply means (not shown) can be used. As the hydrogen supply means, a steam reforming hydrogen generator, hydrogen gas holder, hydrogen cylinder, and the like can be used.

The heat of the combustion gas can be used for the endothermic reaction of reforming raw materials in the steam reformer. In this manner, part of the heat possessed by the combustion gas which is otherwise discharged outside can be effectively recovered.

The steam reformer 63 used in the sintering furnace 100 of this embodiment is not specifically limited. Any instrument that can be installed in the sintering furnace main body 61 and in the passage of the furnace exhaust gas (combustion gas and/or decomposition exhaust gas) 72 and can allow a steam reforming reaction to occur using given heat can be used. At a temperature of less than 1000 °C, such an instrument may be a reaction tube made of a metal or ceramic packed with a reforming catalyst, for example. At 1000°C or more, a ceramic reaction tube can be used. As the steam reformer 63 comprising the above combination, a unit having a low temperature reforming section having a metallic reactor tube or a ceramic reactor tube for causing the steam reforming reaction to occur therein and a reforming catalyst for accelerating the steam reforming reaction packed in the reactor tube, and a high temperature reforming section having a ceramic reactor tube for causing the steam reforming reaction to occur therein can be given. In the above unit, the steam reformer 63 is preferably installed in the sintering furnace main body 61 and/or the furnace exhaust gas (combustion gas and decomposition exhaust gas) 72 flow channel, with the low temperature reforming section being arranged in the location heated to 600-1,000°C and the high temperature reforming section being arranged in the location heated to 1,000-1,800 °C. The metallic reaction tube is suitable for use at temperatures below 1,000°C because of the heat resistance temperature that is not sufficiently high. However, the tube allows the reaction to occur efficiently due to the reforming catalyst for accelerating the steam reforming reaction packed therein. The ceramic reaction tube can allow the steam reforming reaction to occur efficiently without using a reforming catalyst, because the ceramic reaction tube can be used at a high temperature of 1000°C or more. It is possible to use the ceramic reaction tube at temperatures below 1000°C by packing the reforming catalyst therein.

In Figure 2, the steam reformer 63 is installed both in the sintering furnace main body 61 and in the passage of the furnace exhaust gas (combustion gas and decomposition exhaust gas) 72. It is possible to install one steam reformer 63 either in the sintering furnace main body 61 or the furnace exhaust gas passage.

The raw material to be reformed 81 supplied to the steam reformer 63 is preferably a mixture obtained by feeding hydrocarbons and steam respectively from a hydrocarbon supply means (not shown) and a steam supply means (not shown) to a mixer (not shown). Any commonly used hydrocarbon supply means can be used without specific limitations. For example, when using a town gas, hydrocarbons can be supplied from the existing gas piping. If no piping is available, a gas tank may be installed to supply hydrocarbons by piping from the tank. Other hydrocarbons such as liquefied petroleum gas and kerosene can also be supplied by installing piping in the same manner or may be supplied via piping from the locations of a storage means such as a tank, a cylinder, and the like. In this instance, liquid hydrocarbon materials are gasified by heating before feeding to the reformer. If necessary, the raw material gas pressure may be increased using a pressure pump. This is an effective way of carrying out the reaction because the reaction amount can be increased by increasing the raw material gas pressure. Any commonly used steam supply means can be used without specific limitations. For example, a commonly used boiler, an exhaust heat recovery boiler utilizing exhaust heat from a furnace or other heat sources, and the like can be mentioned.

As the material for the ceramic rector tube in the steam reformer 63, at least one ceramic selected from the group consisting of silicon nitride, silicon carbide, aluminum nitride, aluminum oxide, and zirconium oxide is preferably used. The use of such ceramics with high heat resistance ensures a steam reforming reaction at a high temperature. As examples of the material for the metallic reactor tube, SUS309, SUS310, SCH22CF (HK40), SCH24CF (H.P.), HA230, and the like can be given.

When the reactor tube is corroded by the atmosphere in the sintering furnace 100, the reactor tube is inserted into a hole bored through a heat-resistant brick so that heat is transferred to the reactor tube through the brick. Since the heat-resistant brick shuts out the corrosive gas in this configuration, the reactor tube is protected from corrosion.

As the reforming catalyst used in the steam reformer 63, a nickel catalyst, for example, Synetix catalyst manufactured by Johnson Matthey Co., is preferably used. As other effective catalysts, a nickel catalyst, a copper catalyst, a transition metal catalyst, a platinum catalyst, and the like can be given. As a preferable example of the steam reforming reaction using a nickel-containing catalyst, the ICI method in which a mixture of hydrogen (4 mols) and carbon dioxide (1 mol) is produced from methane (1 mol) and water (2 mol) by an endothermic reaction under the conditions of a temperature of 700-950°C and pressure of 1.01 x 10⁵ to 40.52 x 10⁵ (N/m²) in the presence of a nickel-containing catalyst can be given.

The reaction rate of hydrocarbons and water (the ratio of the amount of hydrogen actually produced to the theoretical amount of hydrogen to be produced) in the steam reformer 63 is preferably 50 mol% or more. If less than 50 mol%, the fuel consumption may increase. The reaction rate of hydrocarbons and water is preferably as high as possible.

The hydrogen content in the reformed gas produced in the steam reformer 63 is preferably 10-80 mol%, and the carbon dioxide content is preferably 1-20 mol%.

As the hydrocarbon used as the raw material for the steam reforming reaction in the steam reformer 63, methane, ethane, propane, butane, and the like can be given. Of these, methane is preferable.

When a ceramic reactor tube 24 is used for the steam reforming reaction, hydrocarbons and water is preferably reacted at 1,000-1,800°C to produce hydrogen and carbon dioxide.

In the sintering furnace 100 of this embodiment shown in Figure 2, the hydrogen separator 64 selectively separates the reformed gas 82 containing hydrogen and carbon dioxide produced in the steam reformer 63 into a hydrogen fuel 83 containing hydrogen as a major component and a residual gas 84 containing carbon dioxide. There are no specific limitations to the hydrogen separator 64 inasmuch as the instrument selectively separates hydrogen from the mixed gas containing the hydrogen. For example, a system comprising a cylindrical hydrogen separator formed of a film of palladium or a palladium-containing alloy and a cylindrical container made of stainless steel or the like in which the hydrogen separator is installed so that the atmosphere inside the cylinder of the hydrogen separator can be shut off from the atmosphere outside the cylinder can be mentioned. A mixed gas containing hydrogen is fed to the cylindrical container, then introduced into the inside of the cylinder of the hydrogen separator film to cause hydrogen to selectively permeate from the inside to the outside the hydrogen separator film. The hydrogen flowing to the outside of the hydrogen separator film is sent out to the outside of the cylindrical container as the hydrogen fuel 83. The other gases are allowed to pass through the inside of the hydrogen separator film as the residual gas 84 and sent to the outside of the cylindrical container. It is possible to introduce the mixed gas containing hydrogen to the outside of the hydrogen separator film cylinder and to cause hydrogen to flow to the inside of the hydrogen separator film cylinder. The separated hydrogen is used as the hydrogen fuel 83 containing hydrogen as a major component, and the residual gas 84 containing other gases, including carbon dioxide, is sent to the carbon dioxide immobilizer 65. The residual gas 84 containing carbon dioxide may be mixed with the cathode gas 51 to use the carbon dioxide for power generation in the fuel cell. The term "containing hydrogen as a major component" as used for the hydrogen fuel 83 indicates that the hydrogen content of the fuel is 50 vol% or more. The cylindrical container is not necessarily cylindrical, but may have any shape with an inner space, such as a box, for example. To increase the mechanical strength, the hydrogen separator film may be installed on the surface or inside a porous material, such as a ceramic. The hydrogen separator film is not necessarily cylindrical, but may be plane or may have any other shape.

The hydrogen separator 64 may be integrally formed with the steam reformer 63 so that hydrogen generated in the steam reformer 63 may be selectively separated by the hydrogen separator 64 installed in the steam reformer 63 to be sent out from the steam reformer 63 for used as the hydrogen fuel 83. As the method for installing the hydrogen separator 64 in the steam reformer 63, a method of arranging a cylindrical hydrogen separator film in the steam reformer 63 and packing the cylinder with a reforming catalyst can be mentioned. In this case, since the hydrogen separator film functions as the hydrogen separator 64, the hydrogen separator 64 in effect is arranged in the steam reformer 63. Using this system, the raw material to be reformed 81 introduced into the hydrogen separator film cylinder is converted into hydrogen by the reaction catalyzed by the reforming catalyst packed in the hydrogen separator film cylinder and the generated hydrogen can be transported outside the cylinder through the hydrogen separator film. The hydrogen flowing out is used as the hydrogen fuel 83.

The hydrogen separation efficiency for separating hydrogen from reformed gas 82 using the hydrogen separator 64, in terms of (the residual amount of hydrogen in reformed gas 82 : the amount of separated hydrogen), is preferably 50:50 to 1:99 (volume ratio). If less than 50:50 (volume ratio), the fuel may not be used efficiently. Although a high separation efficiency is desirable, the efficiency of 1:99 (volume ratio) is sufficient as a recovery rate of hydrogen for fuel. A higher separation efficiency may involve a cost increase.

In the sintering furnace 100 of this embodiment shown in Figure 2, the carbon dioxide immobilizer 65 immobilizes carbon dioxide in the residual gas 84 separated in the hydrogen separator 64 so that the carbon dioxide is not discharged outside in a gaseous state. There are no specific limitations to the carbon dioxide immobilizer 65 inasmuch as the instrument can immobilize carbon dioxide in the residual gas 84 so that the carbon dioxide may not be discharged outside in a gaseous state. One example of the method for immobilizing carbon dioxide which is appropriately employed comprises providing an aqueous solution of sodium hydroxide in a container as an immobilizing agent 88 of carbon dioxide and introducing the residual gas 84 into the sodium hydroxide aqueous solution so that the solution is bubbled with the gas to react carbon dioxide in the residual gas 84 with sodium hydroxide, thereby producing sodium carbonate. Since the anode exhaust gas 54 discharged from the fuel cell 41 contains carbon dioxide, this gas may be introduced into the carbon dioxide immobilizer 65 to cause the carbon dioxide to be absorbed. Here, "immobilizing carbon dioxide" indicates an operation of processing carbon dioxide by causing the carbon dioxide to react with or to be absorbed in other compounds, for example, so that the carbon dioxide may not be discharged outside in a gaseous state.

When a sodium hydroxide-containing substance (solution) such as the sodium hydroxide aqueous solution mentioned above is used as an immobilizing agent 88, sodium carbonate can be produced in the carbon dioxide immobilizer 65. The waste fluid 89 discharged from the carbon dioxide immobilizer 65 can be removed as a sodium carbonate-containing solution. The carbon dioxide immobilizer 65 can thus be used as a sodium carbonate production means. The carbon dioxide immobilizer 65 will now be discussed in more detail taking the case in which the carbon dioxide immobilizer 65 is used as a sodium carbonate production means.

There are no specific limitations to the structure of the container used as the carbon dioxide immobilizer 65 insofar as the container can hold an aqueous solution of sodium hydroxide to be reacted with carbon dioxide to produce sodium carbonate therein. For example, a cylindrical container having at least one introductory pipe for introducing the residual gas and sodium hydroxide and an exit for discharging the waste fluid (hereinafter referred to from time to time as "sodium carbonate-containing solution") can be used. The shape of the container is not specifically limited. A circular cylinder, a polygonal cylinder such as a cylinder having a square base (including a box-type), a cylinder having a base with any other shape (including a box-type), and the like can be given. As required, the carbon dioxide immobilizer 65 may be equipped with a stirrer and jacket or coil for heating and cooling. Either a batch type or a semi-batch-type carbon dioxide immobilizer 65 can be used. The batch-type carbon dioxide immobilizer 65 uses one container of the above-mentioned type to react carbon dioxide with sodium hydroxide, while feeding the residual gas. When almost all sodium hydroxide has reacted, the residual gas flow is stopped and the resulting solution containing sodium carbonate is removed, whereupon sodium hydroxide is again charged to the container and feeding of the residual gas is resumed. In the semi-batch-type carbon dioxide immobilizer, two or more containers of the above-mentioned type are used. When almost all the sodium hydroxide has reacted in one of the containers, the residual gas flow is switched to another container, in which production of sodium carbonate is started, while the sodium carbonate-containing solution in the container in which almost all sodium hydroxide has reacted is discharged.

As the method for producing sodium carbonate by immobilizing carbon dioxide, a method of circulating a sodium hydroxide aqueous solution used as the immobilizing agent 88 and feeding the residual gas 84 to the circulated sodium hydroxide aqueous solution to react sodium hydroxide with carbon dioxide can be given. As the method for circulating the sodium hydroxide aqueous solution (which may also contain sodium carbonate that has been produced in the reaction), a method of discharging the sodium hydroxide aqueous solution from the container via piping and returning the discharged solution to the container can be used. In this instance, the carbon dioxide immobilizer 65 may be continuously operated by continuously feeding sodium hydroxide to the circulating system of sodium hydroxide and sodium carbonate-containing aqueous solution produced by the reaction and continuously removing a portion of the circulating sodium carbonate-containing aqueous solution from the system as a sodium carbonate-containing aqueous solution (waste fluid) 89.

When the carbon dioxide immobilizer 65 is used as a sodium carbonate production means, the carbon dioxide content in the residual gas 84 after separating hydrogen from a reformed gas 82 using the hydrogen separator 64 is preferably 15 to 99.9 wt%, and more preferably 60 wt% or more. If less than 15 wt%, impurities in the residual gas 84 increase, making it difficult to obtain high purity sodium carbonate by purifying the sodium carbonate-containing waste fluid 89 discharged from the carbon dioxide immobilizer 65.

When the residual gas 84 contains a large amount of carbon monoxide produced in the steam reformer 64 as a by-product, a carbon monoxide converter may be installed to feed the residual gas 84 thereto. A carbon monoxide converter in which the residual gas 84 controlled at a temperature of 350-360°C is caused to come in contact with an Fe-Cr-based catalyst to convert the carbon monoxide is preferably used. In this carbon monoxide converter, the carbon monoxide is reacted with water to produce carbon dioxide and hydrogen. The carbon monoxide converter can reduce the carbon monoxide content in the residual gas 84 by converting the carbon monoxide in the residual gas 84 into carbon dioxide. The residual gas 84 with a reduced carbon monoxide content is fed to the carbon dioxide immobilizer 65. Since hydrogen is produced in addition to carbon dioxide in the carbon monoxide converter, the residual gas 84 removed from the carbon monoxide converter may be processed in a hydrogen separator to collect hydrogen, which can be used by mixing with the anode gas 53. In this instance, either a separate hydrogen separator may be installed to charge the residual gas 84 thereinto or the hydrogen separator 64 may be used, in which case a portion of the residual gas 84 may be extracted and charged into the hydrogen separator 64 together with the reformed gas 82, thus circulating a portion of the residual gas 84. The residual gas 84 with an increased carbon dioxide content as a result of carbon monoxide conversion (or the residual gas 84 removed from the hydrogen separator, when processed by the hydrogen separator) is sent to the carbon dioxide immobilizer 65.

Sodium carbonate produced in the carbon dioxide immobilizer 65 is discharged from the carbon dioxide immobilizer 65 as a waste fluid (a sodium carbonate-containing solution) 89, which is preferably purified in a sodium carbonate purification step (not shown) and removed as high purity sodium carbonate. For this purpose, the sodium carbonate content in the components excluding water from the sodium carbonate-containing solution 89 produced in the carbon dioxide immobilizer 65 is preferably 80-99.9 wt%, and more preferably 95 wt% or more. If less than 80 wt%, it may be difficult to increase the purity of the sodium carbonate obtained by the purification in the sodium carbonate purification step (not shown).

To increase the purity of sodium carbonate obtained by the purification in this manner, it is desirable to use sodium hydroxide with a high purity in the reaction with carbon dioxide using the carbon dioxide immobilizer 65. Specifically, the sodium hydroxide content in the components excluding water from the immobilizing agent 88 (the total amount of immobilizing agent 88, when the immobilizing agent 88 does not contain water) added to the carbon dioxide immobilizer 65 is preferably 80-99.9 wt%, and more preferably 95 wt% or more. If less than 80 wt%, it is difficult to increase the purity of the sodium hydroxide obtained by the purification. As the immobilizing agent 88, an aqueous solution of sodium hydroxide may be used as mentioned above, or molten sodium hydroxide may also be used. When an aqueous solution of sodium hydroxide is used as the immobilizing agent 88, the sodium hydroxide content in the aqueous solution is preferably 30-95 wt%. If less than 30%, carbon dioxide may not efficiently react due to the too low concentration of sodium hydroxide, resulting in a high carbon dioxide concentration of the gas discharged from the carbon dioxide immobilizer. If more than 95 wt%, fluidity of the aqueous solution of sodium hydroxide is impaired due to the high viscosity of the solution, which may result in difficulty in efficient reaction with carbon dioxide.

The purity of sodium carbonate obtained by purification of the sodium carbonate-containing solution 68 discharged from the carbon dioxide immobilizer 65 using a purification step (not shown) is preferably 98-99.9 wt%, and more preferably 99.0 wt% or more. Sodium carbonate with a purity of 98 wt% or more can be used in a field requiring high purity sodium carbonate such as optical glass, medical supplies, and the like. The purity of sodium carbonate as high as possible is preferable. The concentration of sodium carbonate in the total aqueous solution of sodium carbonate 89 is preferably of 60-95 wt%. If less than 60 wt%, it may be difficult to efficiently produce sodium carbonate crystals due to the low sodium carbonate concentration. If more than 95 wt%, fluidity may be impaired due to too high a concentration of the slurry of sodium carbonate crystals obtained by crystallization of the sodium carbonate.

As the purification method for the sodium carbonate-containing solution 89 discharged from the carbon dioxide immobilizer 65, a method of causing sodium carbonate crystals to deposit and separating the deposited sodium carbonate crystals from the mother liquor is preferably used. Sodium carbonate is preferably purified by a purification step (not shown) provided with a crystallizer (not shown) to deposit sodium carbonate crystals from the sodium carbonate-containing solution 89, and a filter (not shown) to separate the sodium carbonate crystals produced in the crystallizer from the mother liquor.

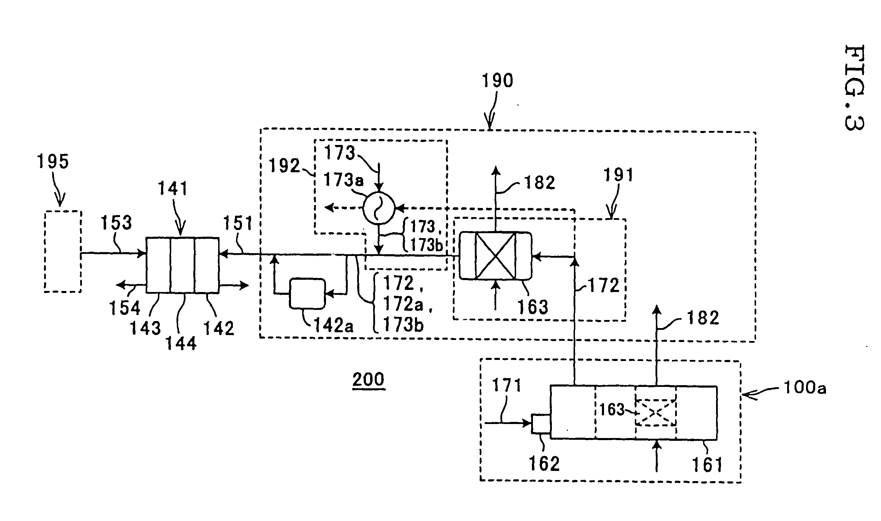

Next, the power generator of the present invention equipped with the above fuel cell will be described. Figure 3 is a block flow diagram schematically showing one embodiment of the power generator of the present invention. As shown in Figure 3, a power generator 200 of the present invention comprises a fuel cell 141 having a cathode 142, an anode 143, and an electrolyte layer 144 containing molten carbonate held between the cathode 142 and anode 143, a cathode gas supply means 190 for supplying a cathode gas 151 containing oxygen and carbon dioxide to the cathode 142, and an anode gas supply means 195 for supplying an anode gas 153 containing hydrogen to the anode 143 to generate electric power by supplying the cathode gas 151 to the cathode 142 and supplying the anode gas 153 to the anode 143, wherein the cathode gas supply means 190 has a furnace exhaust gas supply means 191 which can supply a furnace exhaust gas 172 discharged from an industrial furnace (sintering furnace) 100a for heating materials to the cathode 142 and/or a supply means for gas for cathode use 192 which can supply the gas for cathode use 173 to the cathode 142, the cathode gas 151 supplied to the cathode 142 by the cathode gas supply means 190 contains the furnace exhaust gas 172 transported via the furnace exhaust gas supply means 191 or a mixed gas 172a of the furnace exhaust gas 172 and the gas for cathode use 173 transported via the supplying means for gas for cathode use 192 or a preheated gas for cathode use 173b, which is a gas for cathode use preheated using the furnace exhaust gas 172 as a heat source, and the carbon dioxide concentration of the cathode gas 151 is 0.1-50 vol%.

In the embodiment, the cathode gas 151 is the furnace exhaust gas 172 or the mixed gas 172a, and the industrial furnace is a sintering furnace 100a for heating materials using a combustion gas generated by burning a fuel 171 and the furnace exhaust gas 172 is an exhaust gas of the combustion gas (combustion exhaust gas) anddecomposition gas produced by decomposition of organic materials contained in the heated materials (decomposition exhaust gas).

The fuel 171 is a fuel containing a hydrocarbon.

The hydrocarbon-containing fuel 171 is preferably at least one fuel selected from the group consisting of town gas, liquefied natural gas, LP gas, diesel fuel oil, and heavy oil.

The power generator is preferably further provided with a catalyst combustor 142a and the cathode gas 151 is preferably preheated using the catalyst combustor 142a.

The heat source of the catalyst combustor 142a is preferably the anode exhaust gas 154 discharged from the anode 143.

The power generator is preferably further provided with a heat exchanger 173a and the preheated gas for cathode use 173 is preferably preheated by the heat exchanger 173a using the furnace exhaust gas 172 as a heat source.

Preferably, the power generator is further provided with a steam reformer 163 and the anode gas 153 uses hydrogen contained in the reformed gas 182 reformed in the steam reformer 163.

The other constitutions, use conditions, and the like of the power generator are the same as those of the fuel cell, the operating method of the fuel cell, and the sintering furnace that have already been discussed. For example, although not shown in Figure 3, the power generator may be further provided with the hydrogen separator 64, carbon dioxide immobilizer 65, and the like shown in Figure 2. The same effects can be obtained by employing these constitutions, use conditions, and the like.

The present invention, in which a gas containing a furnace exhaust gas (combustion exhaust gas and decomposition exhaust gas) discharged from sintering furnaces in which ceramics and the like are sintered in the ceramic industry or a mixture of the furnace exhaust gas and a gas for cathode use, which may be a gas for cathode use preheated using the furnace exhaust gas as a heating source, can supply a gas with a high carbon dioxide concentration to the cathode without a process for concentrating the carbon dioxide in the air and can effectively reclaim the heat of furnace exhaust gas, thereby reducing the fuel consumption. Therefore, the present invention effectively uses the molten carbonate fuel cells in various industrial fields in which the molten carbonate fuel cell, sintering furnace, and power generator are used.

## Claims

1. An apparatus having in combination a sintering furnace (61, 161) and a fuel cell (41, 141),
wherein the sintering furnace (61, 161) has
a combustor (62, 162) for combusting fuel containing hydrocarbon to generate a combustion gas
a sintering furnace main body for receiving materials to be sintered and arranged for heating and sintering said materials by the heat of said combustion gas
means for discharging, as furnace exhaust gas, said combustion gas and decomposition gas of organic substances contained in said materials, and
wherein said fuel cell (41, 141) has
a cathode (2, 42, 142)
an anode (3, 43, 143),
an electrolyte layer (4, 44, 144) containing molten carbonate held between the cathode and the anode,
means for supplying a cathode gas containing oxygen and carbon dioxide to the cathode side and an anode gas containing hydrogen to the anode side, thereby to generate electric power,
the apparatus having means arranged for supplying, as said cathode gas, a gas selected from:
a) said furnace exhaust gas,
b) a mixed gas of said furnace exhaust gas and another gas for cathode use, and
c) a mixed gas of said furnace exhaust gas and a preheated gas for cathode use wherein said preheated gas is preheated using said furnace exhaust gas as a preheating source,
the carbon dioxide concentration of the cathode gas being 0.1 - 50 vol %.

2. An apparatus according to claim 1, having a catalyst combustor (42a, 142a) arranged for preheating said cathode gas.

3. An apparatus according to claim 2, having means for supplying anode exhaust gas discharged from said anode (3) to said catalyst combustor as a heat source therefore.

4. An apparatus according to any one of claims 1 to 3, wherein said sintering furnace has a steam reformer (63, 163) for performing a steam reforming reaction producing a reform gas containing hydrogen and carbon dioxide from hydrocarbon and steam.

5. Apparatus according to claim 4, wherein the steam reformer (63, 163) comprises a low temperature reforming section having a metallic reactor tube or a ceramic reactor tube for causing the steam reforming reaction to occur therein and a reforming catalyst for accelerating the steam reforming reaction packed in the reactor tube and a high temperature reforming section having a ceramic reactor tube for causing the steam reforming reaction therein.

6. Apparatus according to claim 5, wherein the steam reformer (63, 163) is installed in the sintering furnace main body and/or a flow channel for the furnace exhaust gas, with the low temperature reforming section being arranged in a location heated to 600 - 1000°C and the high temperature reforming section being arranged in a location heated to 1000 - 1800°C.

7. Apparatus according to any one of claims 4 to 6, having means for supplying part of the whole of the hydrogen contained in the reform gas to the anode as the anode gas.

8. Apparatus according to any one of claims 4 to 7, further provided with a hydrogen separator (64) for selectively separating hydrogen in the reformed gas produced in the steam reformer (63) into a hydrogen fuel containing the hydrogen as a main component and a residual gas containing carbon dioxide by introducing the reformed gas therein.

9. Apparatus according to claim 8, further provided with a carbon dioxide immobilizer (65) for immobilizing the carbon dioxide in the residual gas which is separated by the hydrogen separator and/or the carbon dioxide contained in anode exhaust gas discharged from the molten carbonate fuel cell (41, 141).

10. Apparatus according to any one of claims 1 to 9, wherein the sintering furnace main body is arranged for continuous introduction of said materials to be heated thereinto and continuous carrying of the said materials when heated therefrom.

11. An apparatus according to any one of claims 1 to 10, wherein said cathode gas is said furnace exhaust gas.

12. A method of operating a sintering furnace (61, 161) and a fuel cell (41, 141), wherein the fuel cell has
a cathode (2, 42, 142)
an anode (3, 43, 143),
an electrolyte layer (4, 44, 144) containing molten carbonate held between the cathode and the anode,
the method including the steps of:
introducing materials to be sintered to said sintering furnace (61, 161)
combusting fuel containing hydrocarbon to generate combustion gas and heating and sintering said materials by heat of said combustion gas,
discharging as furnace exhaust gas, said combustion gas and decomposition gas of organic substances contained in said materials being heated and sintered,
supplying to the cathode side of said fuel cell a cathode gas containing oxygen and carbon dioxide, the carbon dioxide concentration of the cathode gas being 0.1 to 50 vol %,
supplying to the anode side of said fuel cell an anode gas containing hydrogen,
thereby generating electric power in said fuel cell,
wherein said cathode gas is selected from
a) said furnace exhaust gas,
b) a mixed gas of said furnace exhaust gas and another gas for cathode use, and
c) a mixed gas of said furnace exhaust gas and a preheated gas for cathode use wherein said preheated gas is preheated using said furnace exhaust gas as a preheating source.

13. A method according to claim 12, wherein said fuel containing hydrocarbon combusted to heat and sinter said materials is selected from town gas, liquefied natural gas, LP gas, diesel fuel oil and heavy oil.

14. A method according to claim 12 or 13, including preheating said cathode gas using a catalyst combustor (42a, 142a).

15. A method according to claim 14, wherein the heat source of the catalyst combustor (42a, 142a) is anode exhaust gas discharged from the anode.

16. A method according to any one of claims 12 to 15, wherein when said cathode gas contains said preheated gas for cathode use, and said preheated gas for cathode use is preheated by a heat exchanger (73a) using said furnace exhaust gas as a heat source.

17. A method according to any one of claims 12 to 16, wherein said anode gas uses hydrogen contained in a reform gas reformed in a steam reformer (62, 162) installed in the industrial furnace.

18. A method according to any one of claims 12 to 17, wherein said materials to be heated and sintered are ceramics.

19. A method according to any one of claims 12 to 18, wherein said materials to be heated and sintered are honeycomb structures.

## Patentansprüche

1. Vorrichtung, die in Kombination einen Sinterofen (61, 161) und eine Brennstoffzelle (41 , 141) aufweist,
worin der Sinterofen (61, 161) Folgendes aufweist:
eine Brennkammer (62, 162) zum Verbrennen von kohlenwasserstoffhältigem Brennstoff zur Bildung eines Verbrennungsgases,
einen Sinterofen-Hauptkörper zur Aufnahme von zu sinternden Materialien, der angeordnet ist, um die Materialien durch die von dem Verbrennungsgas erzeugte Wärme zu erhitzen und zu sintern,
ein Mittel zur Abgabe des Verbrennungsgases und eines Zersetzungsgases aus in den Materialien enthaltenen organischen Substanzen als Ofenabgas,
und
worin die Brennstoffzelle (41, 141) Folgendes aufweist:
eine Kathode (2, 42, 142)
eine Anode (3, 43, 143),
eine Elektrolytschicht (4, 44, 144), die zwischen der Kathode und der Anode gehaltenes geschmolzenes Carbonat enthält,
ein Mittel zur Zufuhr eines sauerstoff- und kohlendioxidhältigen Kathodengases zu der Kathodenseite und eines wasserstoffhältigen Anodengases zu der Anodenseite zur Erzeugung von elektrischem Strom,
wobei die Vorrichtung Mittel aufweist, die angeordnet sind, um als das Kathodengas ein Gas zuzuführen, das aus Folgendem ausgewählt ist:
a) dem Ofenabgas,
b) einem Gasgemisch aus dem Ofenabgas und einem weiteren Gas zur Kathodenverwendung und
c) einem Gasgemisch aus dem Ofenabgas und einem vorerhitzten Gas zur Kathodenverwendung,
worin das vorerhitzte Gas unter Verwendung des Ofenabgases als Vorheizquelle vorerhitzt wird,

2. Vorrichtung nach Anspruch 1 mit einer Katalysatorbrennkammer (42a, 142a), die zum Vorerhitzen des Kathodengases angeordnet ist.

3. Vorrichtung nach Anspruch 2 mit Mitteln zur Zufuhr von aus der Anode (3) abgegebenem Anodenabgas zu der Katalysatorbrennkammer als für dieselbe dienende Wärmequelle.

4. Vorrichtung nach einem der Ansprüche 1 bis 3, worin der Sinterofen einen Dampfreformer (63, 163) zur Durchführung einer Dampfreformierungsreaktion aufweist, um aus Kohlenwasserstoff und Dampf ein Reformgas herzustellen, das Wasserstoff und Kohlendioxid enthält.

5. Vorrichtung nach Anspruch 4, worin der Dampfreformer (63, 163) einen Niedertemperatur-Reformierungsabschnitt mit einem Metall-Reaktorrohr oder einem Keramik-Reaktorrohr, um darin eine Dampfreformierungsreaktion zu bewirken, und einen in das Reaktorrohr eingebauten Reformierungskatalysator zur Beschleunigung der Dampfreformierungsreaktion sowie einen Hochtemperatur-Reformierungsabschnitt mit einem Keramik-Reaktorrohr umfasst, um darin eine Dampfreformierungsreaktion zu bewirken.

6. Vorrichtung nach Anspruch 5, worin der Dampfreformer (63, 163) in dem Sinterofen-Hauptkörper und/oder in einem Strömungskanal für das Ofenabgas eingebaut ist, wobei der Niedertemperatur-Reformierungsabschnitt an einer Stelle angeordnet ist, die auf 600 bis 1.000 °C erhitzt wird und der Hochtemperatur-Reformierungsabschnitt an einer Stelle angeordnet ist, die auf 1.000 bis 1.800 °C erhitzt wird.

7. Vorrichtung nach einem der Ansprüche 4 bis 6 mit Mitteln zur Zufuhr eines Teils des gesamten in dem Reformgas enthaltenen Wasserstoffs zur Anode als Anodengas.

8. Vorrichtung nach einem der Ansprüche 4 bis 7, die ferner mit einem Wasserstofftrenner (64) zum selektiven Trennen von Wasserstoff in dem in dem Dampfreformer (63) hergestellten reformierten Gas in einen Wasserstoffbrennstoff, der Wasserstoff als Hauptkomponente und ein kohlendioxidhältiges Restgas enthält, durch das Einbringen darin des reformierten Gases bereitgestellt ist.

9. Vorrichtung nach Anspruch 8, die ferner mit einem Kohlendioxidimmobilisator (65) zum Immobilisieren des durch den Wasserstofftrenner getrennten Kohlendioxids in dem Restgas und/oder das im Anodenabgas enthaltenen Kohlendioxids, das aus der geschmolzenen Carbonatbrennstoffzelle (41, 141) abgegeben wird, bereitgestellt ist.

10. Vorrichtung nach einem der Ansprüche 1 bis 9, worin der Sinterofen-Hauptkörper zur kontinuierlichen Einbringung der darin zu erhitzenden Materialien und zur kontinuierlichen Aufnahme der Materialien, wenn er durch sie erhitzt wird, angeordnet ist.

11. Vorrichtung nach einem der Ansprüche 1 bis 10, worin das Kathodengas das Ofenabgas ist.

12. Verfahren zum Betreiben eines Sinterofens (61, 161) und einer Brennstoffzelle (41, 141), worin die Brennstoffzelle Folgendes aufweist:
eine Kathode (2, 42, 142),
eine Anode (3, 43, 143),
eine Elektrolytschicht (4, 44, 144), die zwischen der Katode und der Anode gehaltenes geschmolzenes Carbonat enthält,
wobei das Verfahren folgende Schritte umfasst:
das Einbringen von zu sinternden Materialien in den Sinterofen (61, 161),
das Verbrennen von kohlenwasserstoffhältigem Brennstoff zur Erzeugung von Verbrennungsgas und Erhitzen und Sintern der Materialien mittels der vom Verbrennungsgas erzeugten Wärme,
die Abgabe des Verbrennungsgases und eines Zersetzungsgases aus in den Materialien enthaltenen organischen Substanzen als Ofenabgas,
die Zufuhr eines sauerstoff- und kohlendioxidhältigen Kathodengases zu der Kathodenseite der Brennstoffzelle, wobei die Kohlendioxidkonzentration des Kathodengases 0,1 bis 50 Vol.-% beträgt,
die Zufuhr eines wasserstoffhältigen Anodengases zu der Anodenseite zur Erzeugung von elektrischem Strom in der Brennstoffzelle,
worin das Kathodengas aus Folgendem ausgewählt ist:
a) dem Ofenabgas,
b) einem Gasgemisch aus dem Ofenabgas und einem weiteren Gas zur Kathodenverwendung und
c) einem Gasgemisch aus dem Ofenabgas und einem vorerhitzten Gas zur Kathodenverwendung,
worin das vorerhitzte Gas unter Verwendung des Ofenabgases als Vorheizquelle vorerhitzt wird.

13. Verfahren nach Anspruch 12, worin der zum Erhitzen und Sintern der Materialien verbrannte kohlenwasserstoffhältige Brennstoff aus Stadtgas, Flüssigerdgas, LP-Gas, Dieselheizöl und Schweröl ausgewählt ist.

14. Verfahren nach Anspruch 12 oder 13, das die Vorerhitzung des Kathodengases unter Verwendung einer Katalysatorbrennkammer (42a, 142a) umfasst.

15. Verfahren nach Anspruch 14, worin die Wärmequelle der Katalysatorbrennkammer (42a, 142a) aus der Anode abgegebenes Anodenabgas ist.

16. Verfahren nach einem der Ansprüche 12 bis 15, worin, das Kathodengas das vorerhitzte Gas zur Kathodenverwendung enthält, und das vorerhitzte Gas zur Kathodenverwendung durch einen Wärmeaustauscher (73a) unter Verwendung des Ofenabgases als Wärmequelle vorerhitzt wird.

17. Verfahren nach einem der Ansprüche 12 bis 16, worin das Anodengas Wasserstoff einsetzt, der in einem Reformgas enthalten ist, das in einem in dem Industrieofen eingebauten Dampfreformer (62, 162) reformiert wird.

18. Verfahren nach einem der Ansprüche 12 bis 17, worin die zu erhitzenden und zu sinternden Materialien Keramiken sind.

19. Verfahren nach einem der Ansprüche 12 bis 18, worin die zu erhitzenden und zu sinternden Materialien Wabenstrukturen sind.

## Revendications

1. Dispositif comportant en combinaison un four de frittage (61, 161) et une pile à combustible (41, 141),
dans lequel le four de frittage (61, 161) comporte
une chambre de combustion (62, 162) pour la combustion de combustible contenant un hydrocarbure pour générer un gaz de combustion,
un corps principal de four de frittage pour recevoir des matériaux à fritter et agencé pour chauffer et fritter lesdits matériaux par la chaleur dudit gaz de combustion,
des moyens pour décharger, en tant que gaz d'échappement de four, ledit gaz de combustion et un gaz de décomposition de substances organiques contenues dans lesdits matériaux, et
dans lequel ladite pile à combustible (41, 141) comporte
une cathode (2, 42, 142),
une anode (3, 43, 143),
une couche d'électrolyte (4, 44, 144) contenant du carbonate fondu maintenu entre la cathode et l'anode,
des moyens pour fournir un gaz de cathode contenant de l'oxygène et du dioxyde de carbone au côté de cathode et un gaz d'anode contenant de l'hydrogène au côté d'anode, pour générer de ce fait de l'énergie électrique,
le dispositif comportant des moyens agencés pour fournir, en tant que dit gaz de cathode, un gaz sélectionné parmi :
a) ledit gaz d'échappement de four,
b) un gaz mélangé dudit gaz d'échappement de four et d'un autre gaz pour une utilisation par la cathode, et
c) un gaz mélangé dudit gaz d'échappement de four et d'un gaz préchauffé pour une utilisation par la cathode, dans lequel ledit gaz préchauffé est préchauffé en utilisant ledit gaz d'échappement de four en tant que source de préchauffage,
la concentration de dioxyde de carbone du gaz de cathode étant de 0,1 à 50 % en volume.

2. Dispositif selon la revendication 1, comportant une chambre de combustion à catalyseur (42a, 142a) agencée pour préchauffer ledit gaz de cathode.

3. Dispositif selon la revendication 2, comportant des moyens pour fournir le gaz d'échappement d'anode déchargé de ladite anode (3) à ladite chambre de combustion à catalyseur en tant que source de chaleur pour celle-ci.

4. Dispositif selon l'une quelconque des revendications 1 à 3, dans lequel ledit four de frittage comporte un dispositif de reformage à la vapeur (63, 163) pour effectuer une réaction de reformage à la vapeur produisant un gaz reformé contenant de l'hydrogène et du dioxyde de carbone à partir d'un hydrocarbure et de vapeur.

5. Dispositif selon la revendication 4, dans lequel le dispositif de reformage à la vapeur (63, 163) comprend une section de reformage à basse température comportant un tube de réaction métallique ou un tube de réaction en céramique pour amener la réaction de reformage à la vapeur à se produire dans celle-ci et un catalyseur de reformage pour accélérer la réaction de reformage à la vapeur placé dans le tube de réaction et une section de reformage à haute température comportant un tube de réaction en céramique pour provoquer la réaction de reformage à la vapeur dans celui-ci.

6. Dispositif selon la revendication 5, dans lequel le dispositif de reformage à la vapeur (63, 163) est installé dans le corps principal de four de frittage et/ou un canal de circulation pour le gaz d'échappement de four, la section de reformage à basse température étant agencée à un emplacement chauffé à 600 à 1000 °C et la section de reformage à haute température étant agencée à un emplacement chauffé à 1000 à 1800 °C.

7. Dispositif selon l'une quelconque des revendications 4 à 6, comportant des moyens pour fournir une partie de la totalité de l'hydrogène contenu dans le gaz reformé à l'anode en tant que gaz d'anode.

8. Dispositif selon l'une quelconque des revendications 4 à 7, pourvu en outre d'un séparateur d'hydrogène (64) pour séparer de manière sélective l'hydrogène dans le gaz reformé produit dans le dispositif de reformage à la vapeur (63) en un combustible à base d'hydrogène contenant de l'hydrogène en tant que composant principal et en un gaz résiduel contenant du dioxyde de carbone en introduisant le gaz reformé dans celui-ci.

9. Dispositif selon la revendication 8, pourvu en outre d'un immobiliseur de dioxyde de carbone (65) pour immobiliser le dioxyde de carbone dans le gaz résiduel qui est séparé par le séparateur d'hydrogène et/ou le dioxyde de carbone contenu dans le gaz d'échappement d'anode déchargé de la pile à combustible (41, 141) à carbonate fondu.

10. Dispositif selon l'une quelconque des revendications 1 à 9, dans lequel le corps principal de four de frittage est agencé pour l'introduction continue desdits matériaux à chauffer dans celui-ci et pour le transport continu desdits matériaux lorsqu'ils sont chauffés à partir de celui-ci.

11. Dispositif selon l'une quelconque des revendications 1 à 10, dans lequel ledit gaz de cathode est ledit gaz d'échappement de four.

12. Procédé de mise en oeuvre d'un four de frittage (61, 161) et d'une pile à combustible (41, 141), dans lequel la pile à combustible comporte
une cathode (2, 42, 142),
une anode (3, 43, 143),
une couche d'électrolyte (4, 44, 144) contenant du carbonate fondu maintenu entre la cathode et l'anode,
le procédé comprenant les étapes consistant à :
introduire des matériaux à fritter dans ledit four de frittage (61, 161),
brûler un combustible contenant un hydrocarbure pour générer un gaz de combustion et chauffer et fritter lesdits matériaux par la chaleur dudit gaz de combustion,
décharger, en tant que gaz d'échappement de four, ledit gaz de combustion et un gaz de décomposition de substances organiques contenues dans lesdits matériaux chauffés et frittés,
fournir, au côté de cathode de ladite pile à combustible, un gaz de cathode contenant de l'oxygène et du dioxyde de carbone, la concentration de dioxyde de carbone du gaz de cathode étant de 0,1 à 50 % en volume,
fournir, au côté d'anode de ladite pile à combustible, un gaz d'anode contenant de l'hydrogène, générant de ce fait de l'énergie électrique dans ladite pile à combustible,
dans lequel ledit gaz de cathode est sélectionné parmi
a) ledit gaz d'échappement de four,
b) un gaz mélangé dudit gaz d'échappement de four et d'un autre gaz pour une utilisation par la cathode, et
c) un gaz mélangé dudit gaz d'échappement de four et d'un gaz préchauffé pour une utilisation par la cathode, dans lequel ledit gaz préchauffé est préchauffé en utilisant ledit gaz d'échappement de four en tant que source de préchauffage.

13. Procédé selon la revendication 12, dans lequel ledit combustible contenant un hydrocarbure brûlé pour chauffer et fritter lesdits matériaux est sélectionné parmi le gaz de ville, le gaz naturel liquéfié, le gaz de pétrole liquéfié, l'huile diesel et l'huile lourde.

14. Procédé selon la revendication 12 ou 13, comprenant le préchauffage dudit gaz de cathode en utilisant une chambre de combustion à catalyseur (42a, 142a).

15. Procédé selon la revendication 14, dans lequel la source de chaleur de la chambre de combustion à catalyseur (42a, 142a) est un gaz d'échappement d'anode déchargé de l'anode.

16. Procédé selon l'une quelconque des revendications 12 à 15, dans lequel ledit gaz de cathode contient ledit gaz préchauffé pour une utilisation par la cathode, et ledit gaz préchauffé pour une utilisation par la cathode est préchauffé par un échangeur de chaleur (73a) utilisant ledit gaz d'échappement de four en tant que source de chaleur.

17. Procédé selon l'une quelconque des revendications 12 à 16, dans lequel le gaz d'anode utilise l'hydrogène contenu dans un gaz reformé qui est reformé dans un dispositif de reformage à la vapeur (62, 162) installé dans le four industriel.

18. Procédé selon l'une quelconque des revendications 12 à 17, dans lequel lesdits matériaux à chauffer et à fritter sont des céramiques.

19. Procédé selon l'une quelconque des revendications 12 à 18, dans lequel lesdits matériaux à chauffer et à fritter sont des structures en nid d'abeilles.
